# DEMANDE DE BREVET EUROPEEN

(11) **EP 0 940 650 A1**
(43) Date de publication de la demande: **08.09.1999**
(21) Numéro de dépôt: 99400539.5
(22) Date de dépôt: 05.03.1999
(51) Int. Cl.: G01B 3/10, G06G 1/00

(54) **Convertisseur fixe et variable de valeurs de monnaies à ruban**

(30) Priorité: 06.03.1998 FR 9802753
(71) Demandeur: Moraly, Paul, F-93110 Rosny-sous-Bois (FR)
(72) Inventeur: Moraly, Paul, F-93110 Rosny-sous-Bois (FR)
(74) Mandataire: de Saint-Palais, Arnaud Marie

(57) **Abrégé**

Le convertisseur selon l'invention comprend à l'intérieur d'un boîtier (1) un ruban (11) enroulé sur lui-même et sollicité dans le sens de l'enroulement par des moyens élastiques (6). Ce ruban porte sur ses deux faces deux successions de chiffres relatifs aux deux monnaies à convertir. La fraction déroulée du ruban passe par une ouverture (13) du boîtier (1) équipée d'un dispositif de blocage comprenant deux mâchoires transparentes (15,15') constituant loupe. Des moyens prévus pour ouvrir les mâchoires à l'aide d'un doigt. Pour un convertisseur à taux variable deux rubans sont prévus.

## Description

La présente invention concerne un convertisseur de valeurs de monnaies utilisable pour effectuer une conversion biunivoque entre deux monnaies présentant des parités fixes telles que par exemple l'Euro et les monnaies nationales des pays de la Communauté Européenne, ou même des parités variables.

D'une façon générale, on sait que pour effectuer des conversions de ce type, on a proposé d'utiliser des calculatrices de poche (calculettes) spécialement conçues à cet effet. Il s'avère à l'usage que cette solution n'est pas toujours très pratique. En outre, elle présente un certain nombre d'inconvénients, à savoir, notamment :
- pour obtenir ces appareils à un prix intéressant, il faut en faire fabriquer de très grandes quantités,
- il faut une miniaturisation poussée et onéreuse des éléments électroniques, pour rendre ces calculatrices peu encombrantes,
- il faut remplacer les piles souvent en cas d'usage intensif ou utiliser des appareils à énergie solaire, mais dans ce cas, il faut une très bonne source lumineuse,
- il faut aussi avoir une certaine pratique de ces calculatrices pour s'en servir, ce qui gêne beaucoup certaines personnes âgées,
- pour les non-voyants, il faut doter ces appareils d'un système vocal qui rend le prix de revient prohibitif.

Par ailleurs, on a également proposé des convertisseurs en carton ou en matière plastique, avec des tirettes et des fenêtres découpées, ou encore avec des rondelles de carton qui glissent l'une sur l'autre avec un axe central, et dont le principe, dans les deux cas consiste à rechercher la correspondance de valeur par coulissement. Mais, la capacité de ces dispositifs est tout particulièrement réduite, leur encombrement gênant, leur manipulation peu commode. En outre, ils sont, la plupart du temps, très fragiles.

L'invention a donc plus particulièrement pour but de palier à tous ces inconvénients, en proposant un petit instrument, très très compact, manuel, d'une grande simplicité d'emploi (sans calcul), très léger, très ergonomique et surtout très économique.

Selon l'invention, ce convertisseur se compose d'un ruban enroulé sur lui-même, et qui est sollicité dans le sens de l'enroulement par un ressort de rappel, cet ensemble étant logé dans un boîtier muni d'une ouverture par laquelle passe la fraction déroulée du ruban.

Sur l'une des faces du ruban, est imprimée une succession de chiffres correspondant à des valeurs régulièrement croissantes d'une première monnaie, tandis que sur l'autre face sont inscrites les valeurs correspondantes d'une deuxième monnaie, de manière à ce que les valeurs correspondantes des deux monnaies se retrouvent dos à dos sur les deux faces.

L'ouverture du boîtier est équipée d'un dispositif de blocage comportant deux mâchoires situées de part et d'autre du ruban et dont au moins l'une, qui est réalisée au moins partiellement en matière transparente constitue une loupe.

Au moins l'une des mâchoires est mobile par rapport à l'autre et est sollicitée par les moyens élastiques de manière à venir s'appliquer contre l'autre en pinçant le ruban, tandis que des moyens d'actionnement sont prévus pour ouvrir les mâchoires sous l'action d'un doigt, à l'encontre de l'action des moyens élastiques.

Avantageusement, les deux mâchoires seront réalisées en matière transparente de manière à former deux loupes situées de part et d'autre du ruban.

La conversion se réalise donc ainsi, sans aucune difficulté, en consultant au travers des loupes formées par les mâchoires les deux faces du ruban, au même endroit de ce dernier, en fonction de la valeur recherchée, dans l'une ou l'autre monnaie et après avoir déroulé le ruban pour voir la valeur à convertir souhaitée au travers de l'une des deux loupes, la valeur correspondante dans l'autre monnaie étant alors visible au travers de l'autre loupe.

Cette méthode s'avère très simple, très pratique (plus rapide même que l'utilisation d'un boulier).

Pour des raisons de commodité, le ruban, qui sera très souple, (feuillard ou plastique, ou en tissu enduit, ...) sera enroulé sur lui-même, et logé dans un petit boîtier, avec en son centre, un ressort de rappel, pour le ré-enroulement dudit ruban qui aura été tiré hors du boîtier, partiellement ou en totalité. Le système auto-bloquant, formé par les mâchoires, permet de maintenir les sommes souhaitées entre les loupes et donc facilite la lecture des chiffres; il sera débloqué par une pression exercée par un doigt comme dans le cas de "mètres à ruban" pour obtenir un ré-enroulement du ruban.

La forme générale du boîtier, la plus pratique et la moins encombrante, sera ovoïde et très aplatie.

Le changement de parité entre les deux monnaies n'étant pas d'une amplitude ou d'une fréquence telle qu'elle devrait être corrigée quotidiennement, pourra être rétabli et actualisé par un simple changement de ruban, d'autant que ce dernier a un prix de revient dérisoire.

Pour changer le ruban, on opérera de la façon suivante: on tire le ruban complètement jusqu'à l'apparition de son attache avec l'extrémité du ressort de ré-enroulement.

L'auto-blocage du ruban et le blocage par le système optique, offrent une double garantie pour que le ressort ne s'échappe pas avant d'avoir reçu son nouveau ruban. L'attache se faisant par coulissement latéral, les flancs du boîtier empêcheront le ruban de se désolidariser du ressort.

Le coût du ruban est d'autant plus faible qu'il ne comporte qu'une impression monochrome de chiffres, sur chaque face, avec un graphisme d'autant plus lisible qu'il sera grossi par l'élément optique. Des bandes transversales en grisé, en alternance avec le fond blanc du ruban, sont établies pour servir de fond toutes les deux lignes de chiffres. Ces bandes se trouveront en correspondance de chaque côté du ruban, pour ne pas courir le risque de passer sur une mauvaise ligne au-dessus ou au-dessous, en retournant ledit ruban pour le consulter sur l'autre face.

En plus de ces impressions, un embout serti à une extrémité servira de prise pour tirer le ruban, et de butée en fin d'enroulement. (On peut y faire figurer l'indice de parité).

L'autre extrémité aura une attache, interchangeable pour la fixation qui doit être établie avec le bout du ressort de ré-enroulement. Bien entendu, cette attache sera très mince pour pouvoir emprunter le passage du ruban dans l'élément optique grossissant.

Pour corriger chaque changement de parité sur le nouveau ruban, seule une face sera à réajuster (de préférence la valeur de la monnaie la plus forte, car théoriquement, la moins détaillée), l'autre face pouvant être conservée telle quelle.

Les sommes indiquées sur le ruban peuvent être détaillées en centièmes de l'unité de monnaie, mais cela semble peu utile pour la majorité des cas. Aussi, tous les cinq dixièmes paraissent suffisants et cela occasionnera moins de changement de ruban. On prendra pour exemple un ruban de un mètre cinquante (qui ne nécessitera qu'un boîtier de cinq centimètres de diamètre extérieur) avec une hauteur de chiffres imprimés de trois millimètres, ce qui, avec le grossissement de l'élément optique, offrira une lecture bien plus grande que celle des caractères imprimés d'une machine à écrire.

Compte tenu de la hauteur choisie pour les chiffres, on peut obtenir cinq cents sommes sur le ruban, sommes détaillées de 0,5 en 0,5 dixièmes. Ces sommes peuvent être multipliées par 10, ou par 100, voire par 1000, en déplaçant simplement la virgule, virgule matérialisée ici par une ligne verticale, de couleur, disposée longitudinalement par rapport au ruban, entre les colonnes de chiffres. Quatre colonnes suffisent pour les chiffres des 500 sommes et leurs dixièmes, mais on portera à 6, voire à 7, le nombre de colonnes (augmentation vers la droite pour faciliter la lecture de multiplication). Il y aura autant de lignes de couleurs différentes qu'il y aura d'espaces entre les colonnes de chiffres.

Les mêmes lignes et couleurs se retrouveront avec la même disposition de lecture pour chaque côté du ruban, afin que le choix de l'emplacement théorique de cette virgule, puisse se transposer exactement, lors de la lecture des deux faces dudit ruban.

Il n'est pas exclu d'établir ces lignes directement sur le ruban, ni surtout sur toute sa longueur : Toutefois, il peut être préférable de les créer, une fois pour toute au-dessus et au-dessous du passage dudit ruban dans l'élément optique grossissant. Ainsi, ces lignes seront pratiquement en contact, au bon endroit, avec le ruban. Ces lignes seront gravées et teintées en fond de gravure, pour ne pas être effacées par le frottement du défilement du ruban.

L'élaboration et le montage de l'élément optique grossissant se fera en deux pièces, absolument semblables, y compris les lignes gravées et teintées, pour faciliter la fabrication et surtout la pose sur le boîtier, tout en réduisant les frais de moulage.

Avec deux millimètres de large pour les colonnes de chiffres (également grossies), on aura un ruban étroit, entre 12 et 14 mm (avec la multiplication par 1000), ce qui est très faible pour l'épaisseur de l'instrument.

On peut, bien sûr, diminuer la hauteur des chiffres ou rallonger le ruban, mais les dimensions indiquées précédemment semblent plus intéressantes.

Pour les non-voyants, on peut traiter le ruban avec des impressions en "Braille", et même s'il le faut, en augmentant la largeur des espaces colonnes de chiffres. On peut même envisager de faire figurer les chiffres et le "Braille" conjointement.

Les surfaces latérales du boîtier offrent des emplacements intéressants pour la publicité, et seront traitées pour la faciliter, afin de faire de cet instrument un bon cadeau promotionnel, peu coûteux et très utile.

Même en usage intensif, l'instrument devrait avoir une longévité très satisfaisante car sa simplicité en est garante, et la longue expérience des "mètres à ruban" le prouve.

Dans l'exemple précédemment décrit, le changement de parité entre deux monnaies s'effectue en changeant de ruban.

Bien entendu, l'invention ne se limite pas à cette disposition.

Ainsi, selon une autre variante, le convertisseur selon l'invention pourra comprendre dans un même boîtier, deux rubans, à savoir :
- un premier ruban similaire à celui précédemment décrit, enroulé autour d'une première bobine, et
- un deuxième ruban portant une deuxième succession de valeurs et dont les extrémités viennent s'enrouler autour de deux bobines respectives, le mouvement de rotation de la bobine étant lié au mouvement de rotation de l'une des deux autres bobines par l'intermédiaire d'un système de transmission à variateur de vitesse dont le réglage est utilisé pour effectuer une variation du taux de change, une fenêtre transparente prévue sur le boîtier permettant de lire les valeurs des deux rubans en correspondance selon le taux de change choisi.

Dans ce dispositif, le premier ruban constitue l'élément moteur donnant la force motrice pour l'ensemble du système :
- soit par ré-enroulement sur une autre bobine (également dans le boîtier), avec une petite manivelle escamotable,
- soit par ré-enroulement ici aussi avec un petit moteur électrique à pile.

Le deuxième ruban, sur lequel une seule face également sera imprimée avec les sommes de l'autre monnaie à comparer. Ce deuxième ruban se déroulera et se ré-enroulera impérativement entre deux bobines, simultanément.

Comme dans le convertisseur à un seul ruban, des moyens élastiques de rappel, agiront sur les deux rubans pour les ré-enrouler, rubans qui resteront solidaires l'un de l'autre, malgré leur différence de défilement, grâce au variateur de vitesse. ce variateur de vitesse est réglable, avec assez de précision pour obtenir la parité souhaitée entre les deux monnaies.

Des modes d'exécution de l'invention seront décrits ci-après à titre d'exemples non limitatifs, avec référence aux dessins annexés dans lesquels :
La figure 1 est une vue en perspective éclatée d'un convertisseur selon l'invention ;
La figure 2 est une vue en coupe dans un plan médian de symétrie perpendiculaire à l'axe d'enroulement du ruban ;
La figure 3 montre le ruban du convertisseur représenté sur la figure 1 vue au travers d'une mâchoire formant loupe ;
La figure 4 est une représentation schématique, en perspective, illustrant le principe d'un convertisseur à taux de change variable ;
La figure 5 est une coupe axiale du convertisseur de la figure 4 ;
La figure 6 est une vue en perspective de ce convertisseur.

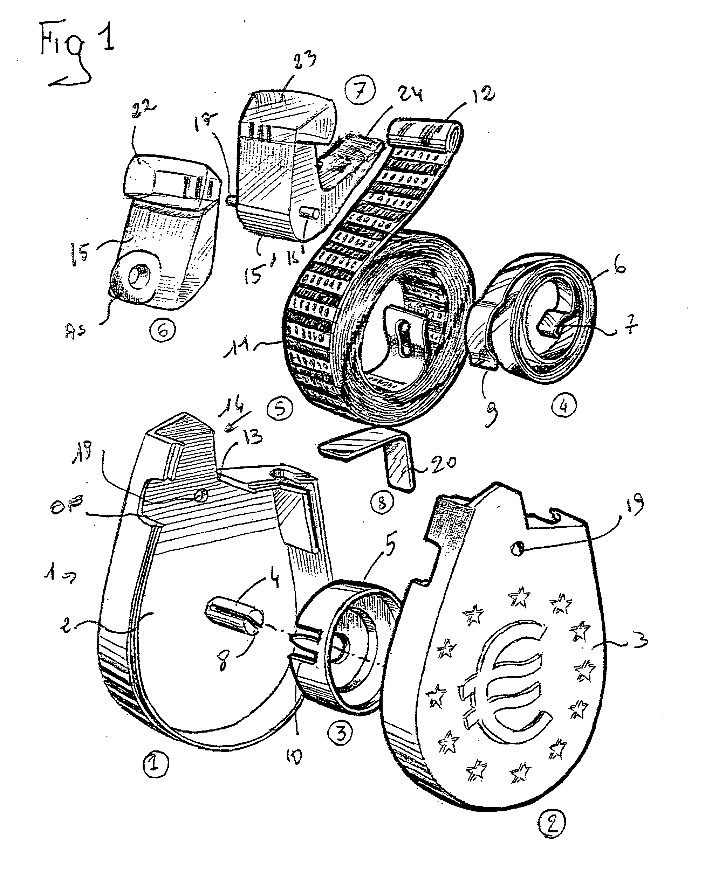

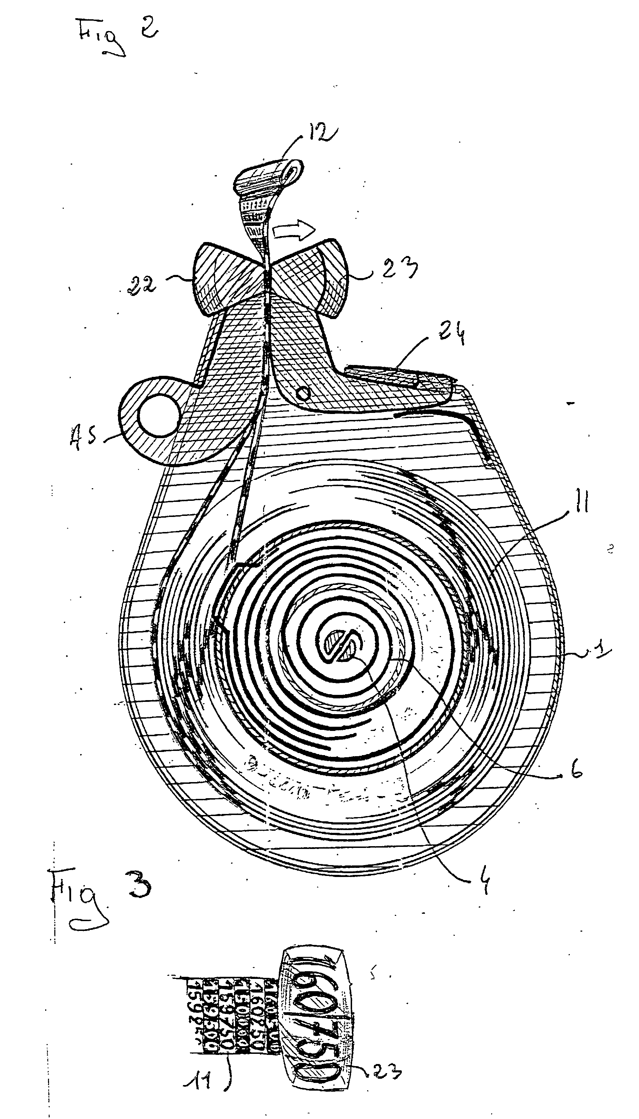

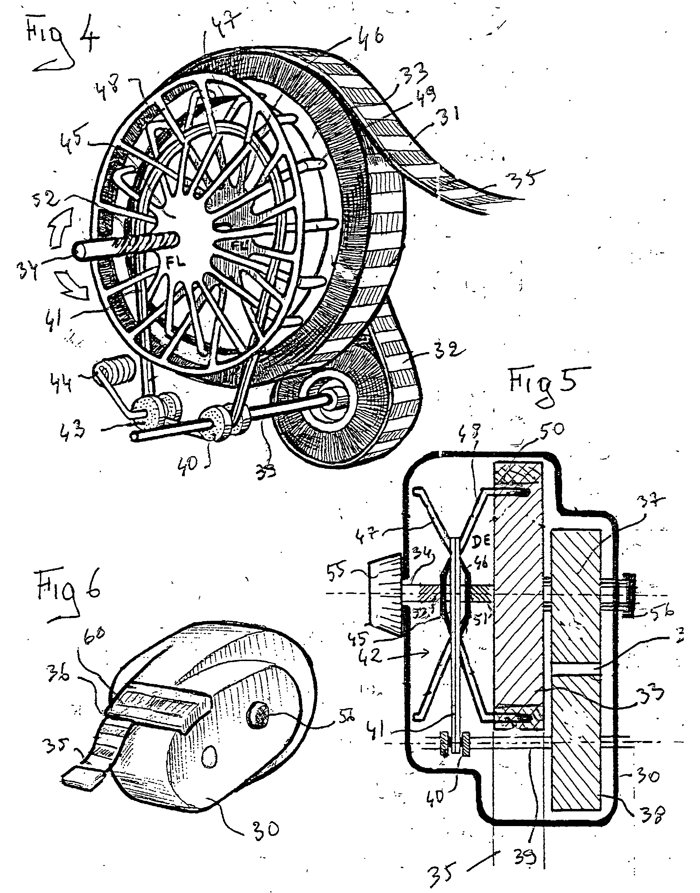

Dans l'exemple représenté sur les figures 1 à 3, le convertisseur se compose d'un boîtier plat 1 dont les faces principales 2, 3, parallèles, présentent une forme ovoïde tronquée du côté de l'extrémité de plus faible rayon de courbure. Dans cet exemple, ce boîtier est réalisé par l'assemblage de deux demi-coquilles dont l'une porte un axe fendu 4 qui s'étend perpendiculairement à la face 2 au niveau du centre de courbure de l'extrémité tronquée 14.

Autour de cet axe 4, est monté rotatif un tambour 5 renfermant un ressort plat en spirale 6 dont une extrémité 7 vient s'engager dans la fente 8 de l'axe 4 tandis que l'autre extrémité 9 vient se bloquer dans une fente 10 de la surface cylindrique du tambour 5.

Sur ce tambour vient se fixer et s'enrouler un ruban 11 dont une extrémité 12 ressort à l'extérieur du boîtier par un orifice 13 prévu au niveau de l'extrémité tronquée 14.

L'orifice 13 est équipé d'un dispositif de blocage du ruban 11 comprenant deux mâchoires, à savoir :
- une mâchoire fixe 15 qui vient se solidariser au boîtier 1 et comprend un anneau de suspension AS passant au travers d'un orifice OP de la paroi latérale du boîtier,
- une mâchoire mobile 15', sensiblement en forme de V, montée basculante grâce à deux tourillons 16, 17 prévus dans la région angulaire du V, qui s'engagent dans deux orifices correspondants 18, 19 prévus sur les faces 2, 3.
   Cette mâchoire 15' est sollicitée par un ressort plat 20 en forme de L qui tend à appliquer l'une de ses deux branches contre la mâchoire 15 en pinçant le ruban 11.

Au niveau où s'effectue le pincement du ruban 11, les deux mâchoires 15, 15' comprennent chacune une protubérance transparente 22, 23 formant loupe destinée à obtenir une vision agrandie des inscriptions portées sur chacune des faces opposées du ruban 11.

La partie 24 de la mâchoire 15' située à l'opposé de la protubérance 23 constitue un levier d'actionnement sur lequel l'opérateur peut appuyer un doigt pour provoquer l'ouverture de la mâchoire et la libération du ruban 11.

Le principe de fonctionnement de ce calculateur a été précédemment décrit en détail et ne sera donc pas exposé à nouveau.

Dans l'exemple illustré sur les figures 4 à 6, le convertisseur comprend à l'intérieur d'un boîtier 30, deux rubans 31, 32 portant chacun une succession de chiffres correspondant à l'une des monnaies que l'on veut convertir, à savoir :
- un premier ruban 31 enroulé et fixé par une extrémité sur un tambour 33 monté rotatif autour d'un axe 34 dans le boîtier 30 et dont l'autre extrémité 35 ressort du boîtier 30 grâce à un orifice 36, et
- un deuxième ruban 32 dont les deux extrémités sont respectivement enroulées sur deux bobines 37, 38 dont l'une 37 est montée coaxialement au tambour 33, tandis que l'autre 38 est solidaire d'un axe 39 monté rotatif sur le boîtier 30 et qui s'étend parallèlement à l'axe 34. Cet axe 39 porte une poulie 40 autour de laquelle s'engage une courroie 41 passant sur une poulie à développement variable 42 d'un variateur de vitesse. Cette courroie 41 passe sur un galet de tension 43 sollicité par un ressort 44.

Dans cet exemple, la poulie à développement variable 42 est constituée par deux flasques coaxiaux 45, 46 prolongés par des éléments rayonnants obliques 47, 48, orientés à l'inverse l'un de l'autre de manière à s'interdigiter.

Le diamètre de la zone circulaire de croisement des éléments rayonnants sur laquelle la courroie 41 est maintenue, est donc variable en fonction de la distance axiale des flasques 45, 46.

Les éléments rayonnants 48 du flasque 45 présentent des extrémités repliées 49 qui s'engagent chacune dans des perçages correspondants 50 du tambour 33 de manière à assurer un couplage en rotation tout en autorisant une translation axiale.

Pour permettre un réglage de cette distance axiale et donc du développement de la poulie, l'axe 34 sur lequel pivotent librement le tambour 33 et la bobine 37, est muni d'un double filetage à pas inversé 51, 52 tandis que les deux flasques 45, 46 sont munis de deux perçages taraudés respectifs coaxiaux venant se visser sur les deux filetages 51, 52.

L'axe 34 traverse d'un côté la paroi du boîtier 30 et porte à son extrémité un bouton d'entraînement en rotation 55. Un bouton poussoir 56 prévu du côté opposé, permet d'assurer un blocage du tambour 33.

Grâce à ces dispositions, le réglage du développement de la poulie 42 et donc le réglage de la parité s'obtient en fixant le tambour 33 au moyen du bouton 56 et en tournant ensuite le bouton 55 dans un sens ou dans l'autre.

Dans cet exemple, le boîtier 30 présente, légèrement au-dessus de l'orifice 36, une double fenêtre grossissante 60 permettant de voir, à échelle agrandie, simultanément les valeurs en correspondance inscrites sur les deux rubans 31, 32 selon le taux de change souhaité, ajusté grâce au bouton rotatif 55.

Le fonctionnement de ce convertisseur est alors le suivant: une fois le taux de change réglé, l'opérateur tire sur l'extrémité 35 du ruban qui ressort de l'orifice jusqu'à ce que la valeur qu'il veut convertir apparaisse dans la fenêtre 60, au droit de l'une des deux rubans 31, 32 correspondant à la monnaie à convertir. Il suffit alors de lire à travers la fenêtre 60 la valeur indiquée sur l'autre bande.

Avantageusement, le ruban 31 pourra comprendre comme dans l'exemple précédent, deux successions de valeurs respectivement inscrites sur ses deux faces opposées et passe entre deux mâchoires loupes.

Ainsi, le convertisseur peut assurer à la fois la conversion de deux monnaies à parité fixe, telles que l'Euro et le Franc, et une troisième monnaie à parité variable, telle que par exemple le Dollar.

## Revendications

1. Convertisseur pour la conversion des valeurs d'au moins deux monnaies, ce convertisseur comprenant un ruban (11) enroulé sur lui-même et sollicité dans le sens de l'enroulement par des moyens élastiques (6), cet ensemble étant logé dans un boîtier (1) muni d'une ouverture (13) par laquelle passe la fraction déroulée du ruban (11), ledit ruban (11) portant sur ses faces deux successions respectives de chiffres correspondant à des valeurs régulièrement croissantes des deux monnaies à convertir, de manière à ce que les valeurs correspondantes des deux monnaies se retrouvent dos à dos sur les deux faces,
caractérisé en ce que l'ouverture (13) du boîtier (1) est équipée d'un dispositif de blocage comportant deux mâchoires (15, 15') situées de part et d'autre du ruban (11) et dont au moins l'une, qui est réalisée au moins partiellement en matériau transparent, constitue une loupe.

2. Convertisseur selon la revendication 1,
caractérisé en ce qu'au moins l'une de ses deux mâchoires (15, 15') est mobile par rapport à l'autre et est sollicitée par des moyens élastiques (20) de manière à venir s'appliquer contre l'autre en pinçant le ruban (11), des moyens d'actionnement étant prévus pour ouvrir les mâchoires (15, 15'), sous l'action d'un doigt, à l'encontre de l'action des moyens élastiques.

3. Convertisseur selon l'une des revendications précédentes,
caractérisé en ce que les deux mâchoires (15, 15') forment deux loupes situées de part et d'autre du ruban (11).

4. Convertisseur selon l'une des revendications précédentes,
caractérisé en ce que le ruban (11) est logé dans un petit boîtier (1) contenant en son centre un ressort de rappel en spirale (6).

5. Convertisseur selon la revendication 4,
caractérisé en ce que le susdit ruban (11) est fixé de façon déconnectable sur le ressort (6) de manière à permettre son remplacement.

6. Convertisseur selon l'une des revendications précédentes,
caractérisé en ce que des bandes transversales colorées en alternance avec la couleur de fond du ruban (11) sont établies pour servir de fond toutes les deux lignes de chiffres inscrites sur le ruban (11).

7. Convertisseur selon l'une des revendications précédentes,
caractérisé en ce que l'extrémité extérieure (12) du ruban (11) est munie d'un embout de prise pour tirer le ruban et servant de butée en fin d'enroulement sur lequel est inscrit l'indice de parité.

8. Convertisseur selon l'une des revendications précédentes,
caractérisé en ce que les susdites mâchoires (15, 15') portent au niveau des susdites loupes, des lignes de différentes couleurs, placées entre les colonnes de chiffres du ruban pour indiquer les virgules.

9. Convertisseur selon la revendication 8,
caractérisé en ce que les susdites lignes sont gravées et teintées en fond de gravure dans les susdites mâchoires.

10. Convertisseur selon l'une des revendications 2 à 9,
caractérisé en ce que la susdite mâchoire mobile (15') présente une forme en V, est articulée au niveau de la région angulaire, et comporte une branche (23) formant loupe, tandis que l'autre branche (24) constitue un levier de manoeuvre, cette mâchoire (15') étant sollicitée par un ressort (20) de manière à ce que la branche formant loupe vienne pincer le ruban contre l'autre mâchoire (15).

11. Convertisseur à taux variable selon la revendication 1,
caractérisé en ce qu'il comprend :
- un premier ruban similaire à celui précédemment décrit, enroulé autour d'une première bobine, et
- un deuxième ruban portant une deuxième succession de valeurs et dont les extrémités viennent s'enrouler autour de deux bobines respectives, le mouvement de rotation de la bobine étant lié au mouvement de rotation de l'une des deux autres bobines par l'intermédiaire d'un système de transmission à variateur de vitesse dont le réglage est utilisé pour effectuer une variation du taux de change, une fenêtre transparente prévue sur le boîtier permettant de lire les valeurs des deux rubans en correspondance selon le taux de change choisi.

12. Convertisseur selon la revendication 11,
caractérisé en ce que le deuxième ruban est imprimé uniquement sur une seule face.

13. Convertisseur selon l'une des revendications 11 et 12,
caractérisé en ce que:
- le premier ruban (31) est enroulé et fixé par une extrémité sur un tambour (33) monté rotatif autour d'un axe (34) dans un boîtier (3) et dont l'autre extrémité ressort du boîtier (30),
- le deuxième ruban (32) a ses deux extrémités respectivement enroulées sur deux bobines dont l'une (38) est solidaire d'un axe (39) monté rotatif sur le boîtier, cet axe portant une poulie autour de laquelle s'engage une courroie qui passe sur une poulie à développement variable (42) d'un variateur de vitesse et sur un galet de tension.

14. Convertisseur selon la revendication 13,
caractérisé en ce que la poulie à développement variable (42) est constituée par deux flasques (45, 46) coaxiaux prolongés par des éléments rayonnants obliques (47, 48) orientés à l'inverse l'un de l'autre, de manière à s'interdigiter, des moyens étant prévus pour régler l'écartement entre les deux flasques.

15. Convertisseur selon la revendication 14,
caractérisé en ce que les éléments rayonnants (48) de l'un des flasques (45) présentent des extrémités repliées (49) qui s'engagent chacune dans des perçages correspondants (50) du tambour (33) de manière à assurer un couplage en rotation tout en autorisant une translation axiale.

16. Convertisseur selon la revendication 15,
caractérisé en ce que l'axe (34) sur lequel pivotent librement le tambour (33) et la bobine (37) est muni d'un double filetage à pas inversé (51, 52) tandis que les deux flasques (45, 46) sont munis de deux perçages taraudés respectifs coaxiaux venant se visser sur les deux filetages (51, 52), des moyens étant prévus pour faire pivoter l'axe (34) tout en maintenant bloqué le tambour (33).

17. Convertisseur selon la revendication 11,
caractérisé en ce que le premier ruban (31) comprend deux successions de valeurs respectivement inscrites sur ses deux faces et passe entre les deux susdites mâchoires/loupes.

18. Convertisseur selon l'une des revendications précédentes,
caractérisé en ce que les inscriptions portées sur les susdits rubans sont en Braille.

19. Convertisseur selon l'une des revendications 1 à 7 et 10 à 17,
caractérisé en ce que les susdits rubans portent sur toutes leurs longueurs des lignes de différentes couleurs, placées entre les colonnes de chiffres du ruban pour indiquer les virgules.
